# EUROPEAN PATENT APPLICATION

(11) **EP 4 592 820 A1**
(43) Date of publication of application: **30.07.2025**
(21) Application number: 23867634.0
(22) Date of filing: 22.09.2023
(51) Int. Cl.: G06F 3/16

(54) **SOUND PLAYING CONTROL METHOD AND APPARATUS, AND ELECTRONIC DEVICE AND VEHICLE**

(30) Priority: 22.09.2022 CN 202211156664; 22.09.2022 CN 202211156644
(71) Applicant: Beijing Co Wheels Technology Co., Ltd, Beijing 101300 (CN)
(72) Inventor: HUANG, Zheng, Beijing 101300 (CN); GOU, Xiaofei, Beijing 101300 (CN); LI, Juan, Beijing 101300 (CN)
(74) Representative: von Bülow & Tamada
(86) International application number: PCT/CN2023/120721
(87) International publication number: WO 2024/061349

(57) **Abstract**

A sound playing control method and apparatus, and an electronic device and a vehicle, which relate to the technical field of sound processing. The method comprises: first, acquiring information of sound effect adjustment configurations performed by a user for different sound channels, wherein the different sound channels are sound channels in different areas in a vehicle; and then, by means of calling a control interface and on the basis of a sound effect parameter value in a sound effect algorithm library that corresponds to the information of the sound effect adjustment configurations, performing digital signal sound effect adjustment processing on a media stream, wherein the media stream subjected to the sound effect adjustment processing is used for sound playing. The degree of freedom at which the user adjusts sound effects can be greatly improved, multiple sound channels in the different areas in the vehicle can be separately set, and thus the sound effect of the whole vehicle is user-defined in view of music playing environments of the areas in the vehicle, so that the obtained sound effect parameter value is more suitable for on-board music playing. Thus, the feeling of the user when listening to music in the vehicle can be effectively improved, thereby improving the vehicle usage experience of the user.

## Description

### CROSS-REFERENCE TO RELATED APPLICATION

The present disclosure claims the priority of Chinese patent application filed on September 22, 2022 before the CNIPA, China National Intellectual Property Administration with the application number of 2022111566648, and the title of "METHOD AND APPARATUS FOR CONTROLLING SOUND PLAYING, ELECTRONIC DEVICE AND VEHICLE", and the priority of Chinese patent application filed on September 22, 2022 before the CNIPA, China National Intellectual Property Administration with the application number of 2022111566440, and the title of "METHOD AND APPARATUS FOR PROCESSING SOUND DATA, ELECTRONIC DEVICE AND VEHICLE", which are incorporated herein in its entirety by reference.

### TECHNICAL FIELD

The present disclosure relates to the field of sound processing technologies, and more particularly to a method and an apparatus for controlling sound playing, an electronic device and a vehicle.

### BACKGROUND

A head unit (HU) is short for an in-vehicle infotainment product installed in a vehicle. The head unit is capable of providing a music playing function, and thus drivers and passengers are relaxed without affecting driving. When playing different sounds, since the sound environment needs different sound effects, it is necessary to make corresponding adjustments to the sound effects of the music to obtain a better music experience.

At present, the sound effect adjustment of on-board music playing mainly depends on equalizers. For example, a left channel and a right channel can be set through the equalizers, or a desired sound effect mode can also be selected through the equalizers. However, this method has a relatively few tuning interfaces open to users, resulting in unsatisfactory tuning settings and poor user experience.

### SUMMARY

In view of this, the present disclosure provides a method and an apparatus for controlling sound playing, an electronic device and a vehicle to solve the technical problem that the sound effect adjustment of on-board music playing mainly depends on equalizers, and this method has a relatively few tuning interfaces open to users, resulting in unsatisfactory tuning settings and poor user experience.

In a first aspect, the present disclosure provides a method for controlling sound playing, including:
receiving tuning configuration information performed by a user for different channels, where the different channels correspond to different areas inside a vehicle; and
performing tuning processing on a media stream by using digital signal processing technologies based on sound effect parameters corresponding to the tuning configuration information in a sound effect algorithm library by calling a control interface, where a tuned media stream is used for sound playing.

In a second aspect, the present disclosure provides a method for processing sound data, including:
receiving tuning configuration information for different channels sent by a client;
performing authentication on the tuning configuration information; and
marking the tuning configuration information as authentication success in response to the tuning configuration information having passed the authentication, where the tuning configuration information with a mark of authentication success is configured to be shared with one or more other clients.

In a third aspect, the present disclosure provides an apparatus for controlling sound playing, including:
a receiving module configured to receive tuning configuration information performed by a user for different channels, where the different channels correspond to different areas inside a vehicle; and
a control module configured to perform tuning processing on a media stream by using digital signal processing technologies based on sound effect parameters corresponding to the tuning configuration information in a sound effect algorithm library by calling a control interface, where a tuned media stream is used for sound playing.

In a fourth aspect, the present disclosure provides an apparatus for processing sound data, including:
a receiving module configured to receive tuning configuration information for different channels sent by a client;
an authentication module configured to perform authentication on the tuning configuration information; and
a marking module configured to mark the tuning configuration information as authentication success in response to the tuning configuration information having passed the authentication, where the tuning configuration information with a mark of authentication success is configured to be shared with one or more other clients.

In a fifth aspect, the present disclosure provides a computer readable storage medium on which a computer program is stored, where the computer program, when executed by a processor, causes the processor to implement the method for controlling sound playing described in the first aspect or the method for processing sound data described in the second aspect.

In a sixth aspect, the present disclosure provides an electronic device, including a storage medium, a processor and a computer program stored on the storage medium and executable on the processor, where the processor, when executing the computer program, implements the method for controlling sound playing described in the first aspect or the method for processing sound data described in the second aspect.

In a seventh aspect, the present disclosure provides a vehicle, including the apparatus described in the third aspect, the apparatus described in the fourth aspect or the electronic device described in the sixth aspect.

According to technical solutions provided in embodiments of the present disclosure, compared with the existing method that only the left channel and the right channel may be set through the equalizers, the present disclosure may have tuning interfaces of the plurality of channels in different areas inside the vehicle open to users, so that the users may set sound effect parameters of sound playing in different areas inside the vehicle. After a user configure these channels through the tuning interfaces of the channels, tuning configuration information performed by the user for different channels is received, where the different channels correspond to different areas inside the vehicle; tuning processing is performed on the media stream by using digital signal processing technologies based on sound effect parameters corresponding to the tuning configuration information in a sound effect algorithm library by calling a control interface, where the tuned media stream is used for sound playing. By applying the technical solutions of the present disclosure, not only may the degree of freedom in tuning performed by the user be greatly improved, but also the plurality of channels in different areas inside the vehicle may be set respectively, so that the sound effect of the whole vehicle may be customized in combination with the music playing environment in the areas inside the vehicle, and sound effect parameters more suitable for music playing may be obtained, thereby effectively improving the feeling of the user when listening to music, and further improving user experience.

The above description is only an overview of the technical solutions of the present disclosure. In order to understand technical means of the present disclosure more clearly, it can be implemented according to contents of the specification, and in order to make the above and other objectives, features and advantages of the present disclosure more obvious and understandable, specific implementation manners of the present disclosure are listed below.

### BRIEF DESCRIPTION OF THE DRAWINGS

The accompanying drawings, which are incorporated in and constitute a part of this specification, illustrate the embodiments in accordance with the present disclosure and together with the specification serve to illustrate the principles of the present disclosure.

In order to more clearly illustrate the technical solutions in the embodiments of the present disclosure or the prior art, the accompanying drawings that are required to be used in the embodiments or the prior art will be briefly introduced below. Obviously, a person skilled in the art can obtain other accompanying drawings according to these accompanying drawings without paying creative labor.
FIG. 1 shows a flowchart of a method for controlling sound playing provided by an embodiment of the present disclosure.
FIG. 2 shows a flowchart of an example provided by an embodiment of the present disclosure.
FIG. 3 shows a flowchart of another method for controlling sound playing provided by an embodiment of the present disclosure.
FIG. 4 shows a flowchart of another example provided by an embodiment of the present disclosure.
FIG. 5 shows a flowchart of a method for processing sound data provided by an embodiment of the present disclosure.
FIG. 6 shows a flowchart of another method for processing sound data provided by an embodiment of the present disclosure.
FIG. 7 shows a schematic structural diagram of an apparatus for controlling sound playing provided by an embodiment of the present disclosure.
FIG. 8 shows a schematic structural diagram of another apparatus for controlling sound playing provided by an embodiment of the present disclosure.
FIG. 9 shows a schematic structural diagram of an apparatus for processing sound data provided by an embodiment of the present disclosure.
FIG. 10 shows a schematic structural diagram of another apparatus for processing sound data provided by an embodiment of the present disclosure.

### DETAILED DESCRIPTION

In order to understand the above objectives, features and advantages of the present disclosure more clearly, the solutions of the present disclosure will be further described below. It should be noted that the embodiments of the present disclosure and the features in the embodiments can be combined with each other without conflict.

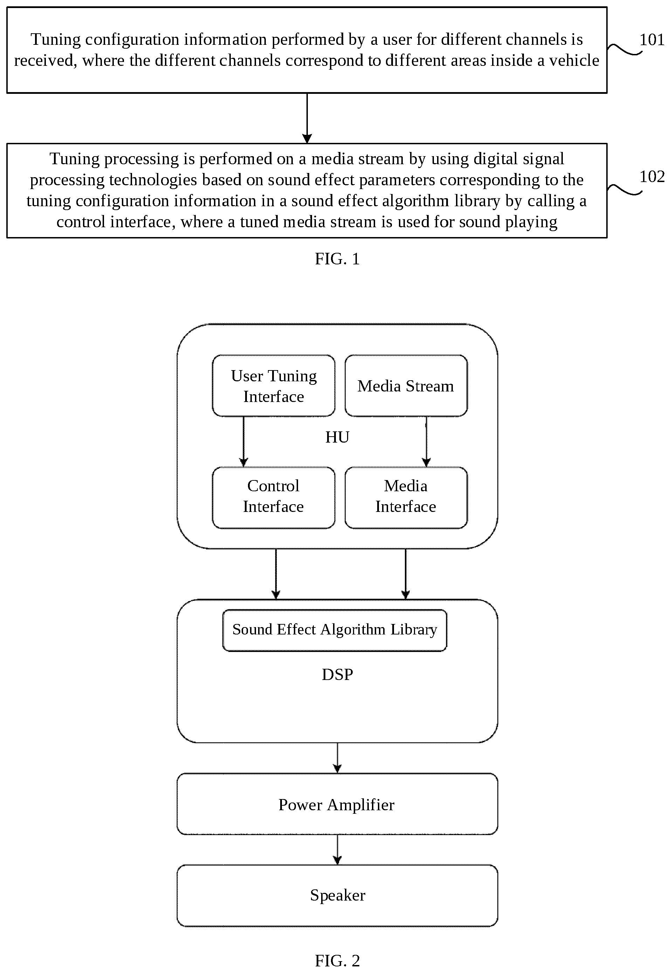

In order to solve the technical problem that the sound effect adjustment of on-board music playing mainly depends on equalizers, and this method has a relatively few tuning interfaces open to users, resulting in unsatisfactory tuning settings and poor user experience, the present disclosure provides a method for controlling sound playing. As shown in FIG. 1, the method for controlling sound playing includes following steps.

Step 101, tuning configuration information performed by a user for different channels is received, where the different channels correspond to different areas inside a vehicle.

Different from the left channel and the right channel, the different channels in the present embodiment can be channels corresponding to different areas inside the vehicle, and the tuning configuration information of the different channels can include mute configuration information, gain configuration information, delay configuration information, and the like of each of the different channels.

For example, the areas inside the vehicle in the present embodiment can be areas inside a cab of a vehicle, and the different channels can be respective channels corresponding to different areas in the cab, for example, a center channel, a left front door channel, a right front door channel, a left rear door channel, a right rear door channel, a left surround channel, a right surround channel, a left front 3D channel, a right front 3D channel, a left rear 3D channel, a right rear 3D channel, and the like.

The executive body of the present embodiment can be an apparatus or device for controlling sound playing, which can be specifically deployed in a head unit end. In the present embodiment, more tuning interfaces can be opened for the user on an operation interface of a head unit system (that is, an in-vehicle infotainment system). For example, each channel can be muted or unmuted, which makes the degree of freedom of sound control higher. Gain can be set for each channel, that is, the gain can be adjusted arbitrarily in a range, and the setting can be reset to a default value, so that the user can finely define his/her favorite sound quality. Delay can be set for each channel, that is, the delay can be adjusted arbitrarily in a range, and the setting can be reset to a default value. In addition, it is also possible to control sound field and sound image of the whole vehicle, and adjust a width, a depth or a height of the sound field.

In practical applications, the users may configure mute information, gain information and/or delay information corresponding to different channels according to different areas (for example, a left front door area, a right front door area, a left rear door area, a right rear door area, and the like) inside the vehicle, thereby greatly improving the degree of freedom in tuning performed by the users. In addition, the users may also set the plurality of channels in different areas inside the vehicle, so as to customize the sound effect of the whole vehicle in combination with the music playing environment in the areas inside the vehicle, and obtain sound effect parameters more suitable for on-board music playing.

Step 102, tuning processing is performed on a media stream by using digital signal processing technologies based on sound effect parameters corresponding to the tuning configuration information in a sound effect algorithm library by calling a control interface.

A tuned media stream is used for sound playing.

The sound effect algorithm library can store sound effect parameters corresponding to different tuning configuration information. In the present embodiment, sound effect parameters corresponding to the tuning configuration information can be obtained from the sound effect algorithm library based on the tuning configuration information performed by a user for different channels according to the areas inside the vehicle.

For example, as shown in FIG. 2, in the head unit (HU) system, the user can adjust sound effects on a user interface (UI) for tuning, that is, mute configuration, gain configuration and/or delay configuration are performed on different channels inside the vehicle according to the areas inside the vehicle. The head unit system calls corresponding tuning interfaces to send the tuning configuration information to a digital signal processing (DSP) processor, and thus the sound effect parameters corresponding to the tuning configuration information in the sound effect algorithm library of the DSP processor may be controlled in real time by calling the interfaces, thereby realizing real-time tuning. At the same time, a media stream of sound (for example, audio broadcast sound, song sound, video sound, or the like) is accessed to the DSP processor through a media interface, sound effect parameters corresponding to current configuration information (at least one of mute configuration information, gain configuration information or delay configuration information of different channels) in the sound effect algorithm library of the DSP processor are obtained, and then tuning processing is performed on the accessed media stream using digital signal processing technologies based on the obtained sound effect parameters, thereby realizing the algorithm processing that the media stream may be tuned in real time. Finally, the tuned media stream passes through a power amplifier and sounds through a speaker to realize sound playing and be perceived by the user.

Compared with the existing method that only the left channel and the right channel may be set through the equalizers, the present disclosure may have tuning interfaces of a plurality of channels in different areas inside the vehicle open to users, so that the users may set sound effect parameters of sound playing in different areas inside the vehicle. In the process of playing on-board music, the user may control any channel to mute and adjust the sound quality, the sound field and the sound image of the whole vehicle, which not only may the degree of freedom in tuning performed by the user be greatly improved, but also the plurality of channels in different areas inside the vehicle may be set respectively, so that the sound effect of the whole vehicle may be customized in combination with the music playing environment in the areas inside the vehicle, and sound effect parameters more suitable for music playing may be obtained, thereby effectively improving the feeling of the user when listening to music inside the vehicle, and further improving user experience.

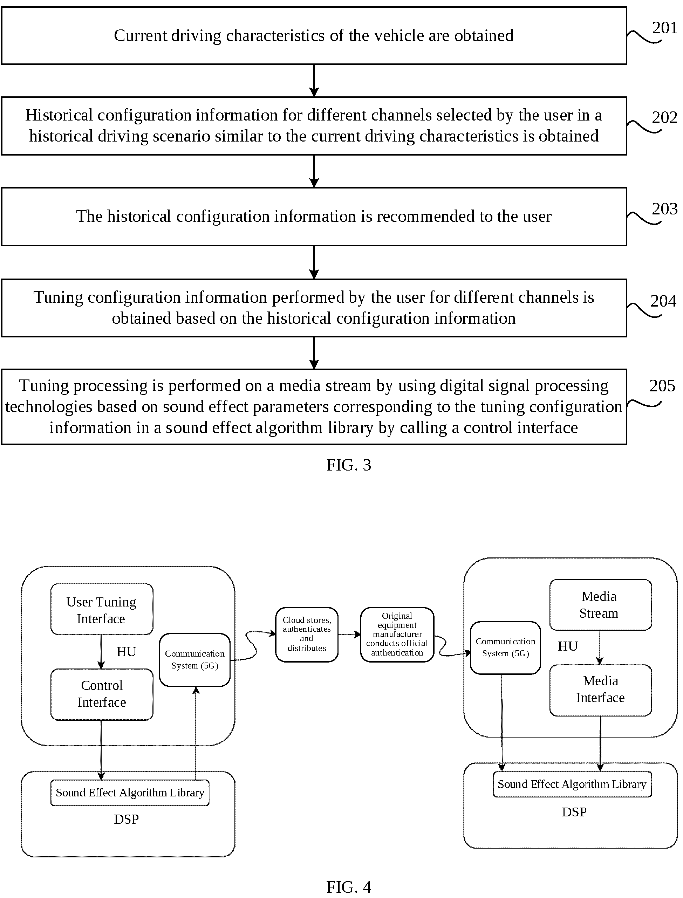

Further, as a refinement and extension of the above embodiment, in order to fully illustrate the specific implementation process of the method of the present embodiment, the present embodiment provides a specific method as shown in FIG. 3. The method for controlling sound playing includes following steps.

Step 201, current driving characteristics of the vehicle are obtained.

In the present embodiment, in order to help the user quickly set tuning parameters that are suitable for a current driving scenario, corresponding tuning setting information can be recommended before the user sets the tuning parameters. Specifically, historical configuration information for different channels selected in a historical driving scenario similar to the current driving characteristics can be obtained and recommended based on the current driving characteristics of the vehicle. Specifically, the processes shown in step 201 to step 203 can be executed.

The current driving characteristics can include but are not limited to time information, driving information, vehicle state information, vehicle location information and vehicle environment information.

Optionally, the time information can include but is not limited to current time, a type of current day and driving time of a current trip. For example, the current time can specifically include but is not limited to current year, month, day (what day of the month), hour and minute. The type of current day can specifically include but is not limited to working days, holidays and weekends. The driving time of the current trip can be driving time from when the vehicle is powered on to when the vehicle travels to the current moment, which reflects driving fatigue of the user to some extent.

The driving information can include but is not limited to an average speed of the vehicle in a certain period of time before the current time, a number of times the accelerator pedal of the vehicle is depressed in a certain period of time before the current time, a number of times the vehicle suddenly accelerates in a certain period of time before the current time, and a number of times the vehicle suddenly decelerates in a certain period of time before the current time. For example, the average speed of the vehicle in the certain period of time before the current time can be an average speed of the vehicle in the first 5 minutes from the current time. The number of times the accelerator pedal of the vehicle is depressed in a certain period of time before the current time can be a number of times that the accelerator pedal of the vehicle is stepped in the first 10 minutes from the current time. The number of times the vehicle suddenly accelerates in a certain period of time before the current time can be a number of times that the acceleration of the vehicle in the first 10 minutes is greater than a certain threshold from the current time. The number of times the vehicle suddenly decelerates in a certain period of time before the current time can be a number of times when the acceleration of the vehicle in the first 10 minutes is less than a certain threshold from the current time. In the present embodiment, the driving information data can be used to represent the smoothness of driving and driving style in the past period of time.

The vehicle state information can include but is not limited to current passenger seat occupancy state and rear seat occupancy state. For example, at the current moment, if the passenger seat occupancy state is 1, it means that there is someone in the passenger seat; and if the passenger seat occupancy state is 0, it means that there is no one in the passenger seat. In addition, at the current moment, if the rear seat occupancy state is 1, it means that there is someone in the rear seats; and if the rear seat occupancy state is 0, it means that there is no one in the rear seats. In the present embodiment, the vehicle state information can be used to distinguish whether the user is driving alone. If there is a child in the passenger seat, it is likely to be easier to select children's songs.

The vehicle location information can include but is not limited to a driving position trajectory within a target journey before the current time, and a starting position of the current journey. For example, the driving position trajectory within the target journey before the current time can be a global positioning system (GPS) position sequence of 1 kilometer (km) from the current time, with an interval of 100 meters. In the present embodiment, the vehicle location information can indirectly reflect traffic information, which is used to represent the driving smoothness in the past period of time.

The vehicle environment information can include but is not limited to current weather information, current wiper state, current interior temperature and current interior humidity. For example, the current weather information can include but is not limited to weather types such as sunny, cloudy, light rain, moderate rain, rainstorm, medium snow, blizzard and smog, and the wind level of outdoor weather. The current wiper state can be whether the current wiper is on or not, and a gear position of the wiper. In the present embodiment, the vehicle environment information can be used to represent somatosensory comfort degree of the user and the mood degree affected by the weather, and the vehicle environment information can also indirectly reflect driving environment information, and then can also be used to represent the driving smoothness, and the like.

Step 202, historical configuration information for different channels selected by the user in a historical driving scenario similar to the current driving characteristics is obtained.

In the present embodiment, when the user needs to adjust sound effects of in-vehicle music playing during driving, the above current driving characteristics can be used as a reference to obtain and recommend the historical configuration information for different channels selected in a historical driving scenario similar to the current driving characteristics.

Optionally, step 202 can specifically include: calculating a similarity between the current driving characteristics of the vehicle with sample driving characteristics when historically selecting a channel configuration; and obtaining the historical configuration information for different channels corresponding to sample driving characteristics with similarity greater than a target threshold. Here, the target threshold can be preset according to actual needs.

The sample driving characteristics can include but are not limited to time information, driving information, vehicle state information, vehicle location information and vehicle environment information during historical driving processes. Details of the characteristic information can refer to the explanation of the time information, the driving information, the vehicle state information, the vehicle location information and the vehicle environment information in step 201, which will not be repeated here. The sample driving characteristics can be historical driving characteristics of the user in the historical driving process.

By performing similarity calculation, it is possible to accurately obtain the historical configuration information for different channels selected in the historical driving scenario similar to the current driving characteristics, thereby improving the accuracy of information recommendation.

For example, calculating the similarity between the current driving characteristics of the vehicle with sample driving characteristics when historically selecting the channel configuration can specifically include: calculating similarities corresponding to the time information, the driving information, the vehicle state information, the vehicle location information and the vehicle environment information respectively to obtain a time information similarity, a driving information similarity, a vehicle state information similarity, a vehicle location information similarity and a vehicle environment information similarity, and multiplying one or more of the time information similarity, the driving information similarity, the vehicle state information similarity, the vehicle location information similarity and the vehicle environment information similarity by corresponding weight values (the weight value can be preset according to actual situations) and summing them to obtain the similarity between the current driving characteristics of the vehicle with the sample driving characteristics.

For example, based on five dimension characteristics of the time information, the driving information, the vehicle state information, the vehicle location information and the vehicle environment information, the similarity between the current driving characteristics with the sample driving characteristics = the time information similarity × the weight value of the time information + the driving information similarity × the weight value of the driving information + the vehicle state information similarity × the weight value of the vehicle state information + the vehicle location information similarity × the weight value of the vehicle location information + the vehicle environment information similarity × the weight value of the vehicle environment information. It should be noted that the similarity calculation of each of the dimension characteristics of the time information, the driving information, the vehicle state information, the vehicle location information and the vehicle environment information can use a calculation manner of similarity measure such as cosine distance or Euclidean distance.

Step 203, the historical configuration information is recommended to the user.

In the present embodiment, the obtained historical configuration information can be recommended to the user, and the historical configuration information can be displayed on the user tuning interface of the vehicle, so that the user may set parameters for different channels in different areas inside the vehicle according to the recommended historical configuration information. For example, the different channels correspond to mute configuration, gain configuration and/or delay configuration respectively, thereby improving the efficiency of setting tuning parameters.

Step 204, tuning configuration information performed by the user for different channels is obtained based on the historical configuration information.

The different channels can be channels corresponding to different areas inside the vehicle. In the present embodiment, the user can select whether to use recommended tuning parameter setting information (that is, the recommended historical configuration information) according to actual needs. If the recommended tuning parameter setting information is not used, the user can set the tuning parameters for different channels by him/her.

Optionally, before receiving the tuning configuration information performed by the user for different channels, the method for controlling sound playing can further include: receiving a crossover channel configuration instruction, and configuring one or more crossover points corresponding to each area inside the vehicle based on the crossover channel configuration instruction to obtain a plurality of channels determined based on the one or more crossover points, where the one or more crossover points include a crossover point between a bass and a midrange, and/or a crossover point between the midrange and a treble.

In the present embodiment, in addition to adjusting the mute configuration, the gain configuration and the delay configuration of each channel, the user can also set the crossover points of the channels. For example, by configuring one or more crossover points corresponding to each area inside the vehicle, a left front door bass, a left front door midrange, a left front door treble, a right front door bass, a right front door midrange, a right front door treble, and the like can be obtained, thereby meeting more tuning setting requirements.

In order to improve the efficiency of tuning configuration, as an optional manner, receiving the tuning configuration information performed by the user for different channels can specifically include: receiving tuning configuration information obtained by merging a plurality of channels corresponding to a same area inside the vehicle, where the plurality of channels corresponding to the same area are capable of performing unified parameter adjustment.

In the present embodiment, the user can preset the channel merging instruction. After receiving the channel merging instruction, the head unit end can merge the plurality of channels corresponding to the same area in the vehicle into one channel, so as to uniformly adjust the parameters of the plurality of channels corresponding to the same area. Further, the tuning configuration information of one or more merged channels corresponding to the same area inside the vehicle can be obtained. Alternatively, the head unit end can merge the plurality of channels corresponding to the same area in advance to obtain a merged channel, and provide preconfigured information to the user. When the user starts a channel merging option, the tuning configuration information received by the head unit end is the configuration information for channel merging.

For example, there may be crossover channels in the same area. If the user does not want to adjust each channel separately, the plurality of channels can be merged into one channel and then the merged channel can be adjusted. For example, there are three channels in the left front door area, namely, the left front door bass, the left front door midrange and the left front door treble. These three channels can be merged into a left front door channel, and then parameters of the left front door channel can be adjusted. The crossover point can use default parameters.

Table 1 shows merged combination of the plurality of channels.

**Table 1**

| Crossover Channel | Merged Channel |
|---|---|
| Center Midrange | Center Channel |
| Center Treble | |
| Left Front Door Bass | Left Front Door Channel |
| Left Front Door Midrange | |
| Left Front Door Treble | |
| Right Front Door Bass | Right Front Door Channel |
| Right Front Door Midrange | |
| Right Front Door Treble | |
| Left Rear Door Bass | Left Rear Door Channel |
| Left Rear Door Midrange | |
| Left Rear Door Treble | |
| Right Rear Door Bass | Right Rear Door Channel |
| Right Rear Door Midrange | |
| Right Rear Door Treble | |
| Left Surround Midrange | Left Surround Channel |
| Left Surround Treble | |
| Right Surround Midrange | Right Surround Channel |
| Right Surround Treble | |
| Left Front 3D Midrange | Left Front 3D Channel |
| Left Front 3D Treble | |
| Right Front 3D Midrange | Right Front 3D Channel |
| Right Front 3D Treble | |
| Left Rear 3D Midrange | Left Rear 3D Channel |
| Left Rear 3D Treble | |
| Right Rear 3D Midrange | Right Rear 3D Channel |
| Right Rear 3D Treble | |

After setting based on the above Table 1, it is possible to uniformly adjust the parameters of the plurality of channels corresponding to the same area, thereby improving the efficiency of tuning configuration.

In order to improve the efficiency of tuning configuration, as another optional manner, receiving the tuning configuration information performed by the user for different channels include: receiving tuning configuration information obtained by grouping a plurality of channels corresponding to left-right symmetrical areas inside the vehicle, where the plurality of channels corresponding to the left-right symmetrical areas are capable of performing unified parameter adjustment.

In the present embodiment, the user can preset the channel grouping instruction. After receiving the channel grouping instruction, the head unit end can bind a plurality of channels corresponding to left-right symmetrical areas inside the vehicle, so that the parameters of the plurality of channels corresponding to the left-right symmetrical areas can be adjusted uniformly. Alternatively, the head unit end can preconfigure channel grouping and provide preconfigured information to the user. When the user starts a channel grouping option, the tuning configuration information received by the head unit end is the configuration information for the channel grouping.

For example, since the left channel and the right channel in the cabin are completely symmetrical, for example, the left front door bass channel and the right front door bass channel, the adjusted gain, delay, equalization and crossover are mostly the same, that is, by binding the plurality of channels corresponding to the left-right symmetrical areas, parameters of a plurality of bound channels can be uniformly adjusted by using the same gain, delay, equalization, and the like, thereby improving the flexibility of tuning configuration and the efficiency of tuning configuration. The plurality of channel groups can include but are not limited to the left front door bass and the right front door bass, the left front door midrange and the right front door midrange, the left front door treble and the right front door treble, the left rear door bass and the right rear door bass, the left rear door midrange and the right rear door midrange, the left rear door treble and the right rear door treble, the left rear surround midrange and the right rear surround midrange, the left rear surround treble and the right rear surround treble, the left front 3D midrange and the right front 3D midrange, the left front 3D treble and the right front 3D treble, the left rear 3D midrange and the right rear 3D midrange, and the left rear 3D treble and the right rear 3D treble.

Further optionally, left-right symmetrical grouping adjustment can also be performed on channels obtained after channel merging. For example, the grouping can include: left front door channel and right front door channel, left rear door channel and right rear door channel, left surround channel and right surround channel, left front 3D channel and right front 3D channel, left rear 3D channel and right rear 3D channel, and the like.

After setting the tuning parameters, the user can also share the tuning settings with other vehicle owners through a network. Optionally, the tuning configuration information obtained in step 204 can be uploaded to a server for sharing. The method for controlling sound playing can also include: receiving a configuration sharing instruction, and uploading the tuning configuration information to a server for authentication (for example, verifying whether the user sharing the tuning configuration information is a community user, or whether the user has sharing permission, or the like) based on the configuration sharing instruction, where tuning configuration information that has passed the authentication is capable of sharing in a community. For example, the parameters adjusted by the user can be uploaded to the cloud for community sharing, and the tuning parameters verified by the server can also be distributed and recommended to the user, thereby forming an ecological closed loop of tuning application. The user can store the tuned parameters locally, or upload the tuned parameters to the cloud for sharing. As shown in FIG. 4, the tuning configuration information can be uploaded to the cloud (or referred to as the server) through a 5G communication system, and the cloud stores, authenticates and distributes the received tuning configuration information. After downloading, verifying and filtering the tuning of the user, an original equipment manufacturer (OEM) will conduct official authentication and push. All users can download and store pushed contents locally, and apply the sound effects corresponding to the tuning configuration information to their own vehicles. Media playing can be processed by the downloaded sound effect parameters, thereby forming a tuning application ecosystem.

Compared with the traditional user-defined equalizer adjustment parameters, which can only be stored locally and cannot be uploaded to the cloud and shared with other vehicle owners, the solutions provided in the present embodiments can upload the tuning parameters configured by the user to the cloud for sharing, and after the authentication is conducted by the original equipment manufacturer, other users can download and apply the tuning parameters, thereby forming an ecological closed loop of tuning application. By applying the technical solutions of the present embodiments, the user may not only tune locally, but also interact with other users, that is, based on the data shared by the cloud, each user may become a tuner, and all parameters authenticated by the cloud may be downloaded freely, thereby enriching choices of the user, increasing interaction and playability and improving user experience.

Step 205, tuning processing is performed on a media stream by using digital signal processing technologies based on sound effect parameters corresponding to the tuning configuration information in a sound effect algorithm library by calling a control interface.

A tuned media stream is used for sound playing.

Considering the plurality of channels in different areas inside the vehicle, the present embodiment proposes a method for controlling sound playing. By opening more tuning interfaces to the user, the degree of freedom in tuning performed by the user may be greatly improved, so that the sound effect of the whole vehicle may be customized. By applying the technical solutions of the present embodiments, the user may control any channel to mute and adjust the sound quality, the sound field and the sound image of the whole vehicle in the process of playing on-board music.

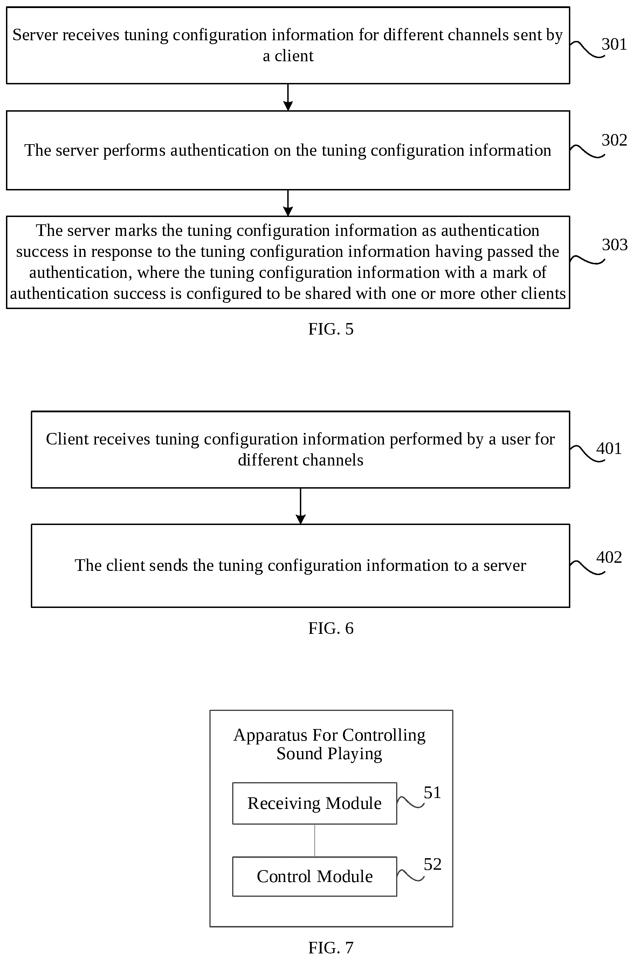

Further, in order to illustrate the specific implementation process of the example shown in FIG. 4, that is, to solve the technical problem that the tuning parameters customized by the user for sound effects can only be stored locally, other users cannot directly obtain the tuning parameters, and other users can only define the tuning parameters themselves, which is time-consuming and laborious, combined with the contents of the above embodiments, the present embodiment also provides a method for processing sound data, which can be applied to a server (or referred to as the cloud, and the like). As shown in FIG. 5, the method includes following steps.

Step 301, a server receives tuning configuration information for different channels sent by a client.

The tuning configuration information of the different channels can include mute configuration information, gain configuration information, delay configuration information, and the like of each of the different channels.

In the present embodiment, the user can select whether to upload the tuning configuration information of different channels to the server according to actual needs. If the user selects to upload for sharing, the server will receive the tuning configuration information of different channels sent by the client.

Step 302, the server performs authentication on the tuning configuration information.

In order to ensure that the tuning configuration information shared with other users is safe, reliable, true and effective, the server needs to perform authentication on the tuning configuration information uploaded by the user. For example, verifying whether the user sharing the tuning configuration information is a community user, or whether the user has sharing permission, or the like. If the user is not the community user, and/or the user does not have the sharing permission, it can be directly determined that the authentication has failed (that is, authentication failure).

For example, filtering can be performed based on a blacklist and a whitelist. If an account identifier of a client with the tuning configuration information does not exist in the blacklist and/or the account identifier of the client exists in the whitelist, further authentication can be performed on contents of the tuning configuration information; and if the account identifier of the client with the tuning configuration information exists in the blacklist, it can be directly determined that the authentication has failed (that is, authentication failure).

Step 303, the server marks the tuning configuration information as authentication success in response to the tuning configuration information having passed the authentication.

The tuning configuration information with a mark of authentication success is configured to be shared with one or more other clients.

In the present embodiment, a marking manner can include but is not limited to attaching a specific authentication tag to the tuning configuration information that has passed the authentication, and the tuning configuration information with the authentication tag can be shared with one or more other clients. The tuning configuration information that has passed the authentication is marked as "authentication success", and the tuning configuration information that has not passed the authentication is marked as "authentication failure". When sharing, only the tuning configuration information marked as "authentication success" can be shared.

By applying the technical solutions of the present embodiments, the user can upload the customized tuning configuration parameters to the server and share the customized tuning configuration parameters after successful authentication, so that other users can download and apply the customized tuning configuration parameters, thereby forming an ecological closed loop of tuning application. By applying the technical solutions of the present embodiments, the user may not only tune locally, but also interact with other users, that is, based on the data shared by the cloud, each user may become a tuner, and all parameters authenticated by the cloud may be downloaded freely, thereby enriching choices of the user, increasing interaction and playability and improving user experience.

Further, as a refinement and extension of the above embodiment, there may be various optional manners for the specific authentication process in step 302. As an optional manner, performing authentication on the tuning configuration information can specifically include: scoring the tuning configuration information based on a set evaluation dimension to obtain scoring information; and determining whether the tuning configuration information has passed the authentication based on the scoring information.

There may be multiple set evaluation dimensions according to acoustic requirements, and each of the multiple set evaluation dimensions corresponds to scoring information, and thus it is possible to comprehensively determine whether the specific content of the tuning configuration information has passed the authentication based on the scoring information of these evaluation dimensions. Through this optional manner, the tuning configuration information can be accurately authenticated, thereby ensuring that the tuning configuration information that has passed the authentication is safe, reliable, true and effective.

For example, scoring the tuning configuration information based on the set evaluation dimension to obtain the scoring information can specifically include: playing a test song based on the tuning configuration information (test songs corresponding to different evaluation dimensions can be specified); and determining a scoring score of the tuning configuration information based on a playing effect of the test song, where the set evaluation dimension includes at least one of sound quality dimension, sound field dimension, sound image dimension, overall listening dimension, ambisonic dimension or vibration dimension.

Further, determining whether the tuning configuration information has passed the authentication based on the scoring information can specifically include: performing weighted summation on scoring scores to obtain an evaluation total score; and determining that the tuning configuration information has passed the authentication in response to the evaluation total score being greater than or equal to a target score threshold. Here, the target score threshold can be preset according to actual needs, for example, the target score threshold can be any value in a range of 60 points to 85 points.

The sound quality dimension can be specifically divided into sub-dimensions such as low frequency, intermediate frequency, high frequency and balance degree. For the test of low frequency sub-dimension, for example, when playing a song 1 (a song used to reflect low frequency effect) based on the tuning configuration information, electronic drums of the first 30 seconds are obtained for evaluation, where the expected evaluation is rich, full, elastic, clean and clear, and natural in envelope. For the test of intermediate frequency sub-dimension, for example, when playing a song 2 (a song used to reflect intermediate frequency effect) based on the tuning configuration information, the expected evaluation is that the voice is rich, full, soft, warm and clear; the fundamental frequency of a guitar is full, and the strings resonate naturally with the box, which has a charm. For the test of high frequency sub-dimension, for example, when playing a song 3 (a song used to reflect high frequency effect) based on the tuning configuration information, the expected evaluation is that the sand hammer is delicate and true, the guitar is crisp and not boring, the voice is naturally clear, and the presence is full of details. For the test of the balance degree sub-dimension, for example, when playing a song 4 (a song used to reflect the balance degree effect) based on the tuning configuration information, the expected evaluation is that the three sections will perform their own duties, with low frequency drums, rich instruments and delicate voice all being displayed, without any overwhelming situations.

The sound field dimension can be specifically divided into sub-dimensions such as width, height, depth, left-right symmetry and resonance. For the test of the width sub-dimension, for example, when playing a song 5 (a song used to reflect the width effect) based on the tuning configuration information, the expected evaluation is that the prelude has a strong left-right stereoscopic impression and the sound field is the same width as door panels on both sides. For the test of the height sub-dimension, for example, when playing a song 6 (a song used to reflect the height effect) based on the tuning configuration information, the expected evaluation is that the low frequency is above the IP station, and the voice and instruments are directly in front of each passenger. For the test of the depth sub-dimension, for example, when playing a song 7 (a song used to reflect the depth effect) based on the tuning configuration information, the expected evaluation is that the front row voice position is deep at the front windshield and the rear row is at the headrest of the front seat, so as to avoid the oppressive feeling caused by being too close to the passenger. For the test of the left-right symmetry sub-dimension, for example, when playing a song 8 (a song used to reflect the left-right symmetry effect) based on the tuning configuration information, the expected evaluation is that the passenger sitting on the left side has the same hearing sense as the passenger sitting on the right side. For the test of the resonance sub-dimension, for example, when playing a song 9 (a song used to reflect the resonance effect) based on the tuning configuration information, the expected evaluation is that there is no obvious resonance noise in the first 30 seconds.

The sound image dimension can be specifically divided into sub-dimensions such as position and focus. For the test of the position sub-dimension, for example, when playing a song 10 (a song used to reflect the position effect) based on the tuning configuration information, the expected evaluation is that the voice is located in front of each passenger. For the test of the focus sub-dimension, for example, when playing a song 11 (a song used to reflect the focus effect) based on the tuning configuration information, the expected evaluation is that the focus of voice emanates from an area with a big fist and does not diverge.

The overall listening dimension can be specifically divided into sub-dimensions such as bandwidth, dynamic range, surround sense, layering sense, clarity, volume curve, equal sound compensation and speed compensation. The ambisonic dimension can be specifically divided into sub-dimensions such as orientation sense, surround sense, spatial width, clarity and bass compensation.

In the present embodiment, each of the above sub-dimensions is scored separately, that is, it is determined whether the expected evaluation standard is reached. The closer to the standard, the higher the score, and finally a scoring score corresponding to each sub-dimension can be obtained. The scoring score corresponding to each sub-dimension is multiplied by a corresponding weight (for example, the weight of the low frequency sub-dimension of the sound quality dimension is 4, the weight of the position sub-dimension of the sound field dimension is 8, and the weight of the azimuth sub-dimension of the ambisonic dimension is 6, and the like), and then a total score is obtained by summing them. If the total score is greater than or equal to a target score threshold, it can be determined that the tuning configuration information has passed the authentication; and if the total score is less than the target score threshold, it can be determined that the tuning configuration information has not passed the authentication. It should be noted that in practical applications, the total score can be calculated by multiplying the total score by a scaling factor or adding and subtracting a constant after the total score is obtained by the above method, and the final total score can be obtained for determination.

In specific applications, the user can also obtain tuning configuration information for different channels based on specific song settings, and then obtain the tuning configuration information corresponding to the song. As an optional manner, step 301 can specifically include: receiving, by the server, tuning configuration information for different channels sent by a client and a target song corresponding to the tuning configuration information. Correspondingly, playing the test song based on the tuning configuration information can specifically include: playing the target song based on the tuning configuration information; correspondingly, determining the scoring score of the tuning configuration information based on the playing effect of the test song can specifically include: determining the scoring score of the tuning configuration information based on the playing effect of the target song.

For example, when listening to a certain song, the user sets tuning configuration information for each channel that the user thinks is relatively good for the song, and uploads the tuning configuration information to the server for sharing. When performing authentication on the song, the server can use the song as a test song to test the playback effect of the tuning configuration information. The specific process is similar to the test process of the above evaluation dimensions, except that the song is uniformly used as the test song. If the final total score is greater than or equal to a certain threshold, it indicates that the tuning configuration information has passed the authentication and is the tuning configuration information set for the song.

By this optional manner, accurately authentication can be performed on the tuning configuration information of the target song, which can not only improve the efficiency of authentication, but also meet more business requirements.

Optionally, the method for processing sound data can further include: in response to the tuning configuration information of the target song having passed the authentication, generating binding recommendation information based on the tuning configuration information and the target song. That is, when recommending to other users, the tuning configuration information is recommended together with the target song.

For example, when other users are listening to this song (the target song), a prompt pops up to prompt that the matching tuning configuration information can be used, that is, the song can be directly played using the set tuning configuration information without setting the tuning parameters themselves. Alternatively, when other users need to listen to a song, a recommendation mode can be select, and then the server recommends the user to listen to the song (the target song), and uses the matching tuning configuration information, which is automatically used when the user selects to play the song.

Through the above optional manner, listening experience of the user can be improved, and the tuning parameters for the target song can be shared, thereby meeting more business requirements and increasing user freedom.

As another optional manner, performing authentication on the tuning configuration information can specifically include: performing frequency response test and phase test on the tuning configuration information; and in response to frequency response information and phase information corresponding to the tuning configuration information conforming to a target change law, determining that the tuning configuration information has passed the authentication. Through this optional manner, accurately authentication can be performed on the tuning configuration information, thereby ensuring that the tuning configuration information that has passed the authentication is safe, reliable, true and effective.

For example, a frequency response fluctuation curve and a phase fluctuation curve corresponding to the tuning configuration information can be obtained. If both the frequency response fluctuation curve and the phase fluctuation curve conform to the target change law, it can be determined that the tuning configuration information has passed the authentication, otherwise, it can be determined that the tuning configuration information has not passed the authentication.

For the specific authentication process in step 302, as another optional manner, whether the tuning configuration information has passed the authentication it can be comprehensively determined by combining the above two optional manners. For example, the scoring information of the tuning configuration information is obtained based on the set evaluation dimension, and frequency response test and phase test are performed on the tuning configuration information, Then, it is comprehensively determined whether the tuning configuration information has passed the authentication based on the scoring information and test results of frequency response and phase of the tuning configuration information. If the total score of each evaluation dimension is greater than or equal to a certain score threshold, and the frequency response information and phase information corresponding to the tuning configuration information conform to the target change law, it is determined that the tuning configuration information has passed the authentication.

Through the above optional manners, whether the tuning configuration information has passed the authentication can be comprehensively determined from multiple perspectives, thereby ensuring that the tuning configuration information has passed the authentication is safe, reliable, true and effective.

Optionally, the method for processing sound data can further include: generating recommendation information based on the tuning configuration information with a mark of authentication success and sending the recommendation information to the client. For example, the generated recommendation information can be presented to the user in a table format, and the user can select the tuning configuration information from the table according to his/her own needs. In addition, author information that sets the tuning configuration information and the corresponding user evaluation information can also be listed in the table.

Through this recommendation manner, the user can intuitively know which shared tuning configuration information can be used, and can interact with other users for tuning, thereby improving user experience.

The above embodiment describes the process of processing sound data described on the server side. Further, in order to fully illustrate the implementation of the present embodiment, the present embodiment also provides a method for processing sound data executed on a client side. It should be noted that this method can be combined with the method shown in FIG. 5. As shown in FIG. 6, the method includes following steps.

Step 401, a client receives tuning configuration information performed by a user for different channels.

For example, after obtaining the consent of the user, the tuning configuration information set by the user can be shared, that is, the processes shown in step 401 to step 402 can be executed.

Step 402, the client sends the tuning configuration information to a server.

Further, the server performs authentication on the tuning configuration information (for the specific authentication process, refer to the example description in FIG. 5, which is not repeated here), where the tuning configuration information with the mark of authentication success can be shared with one or more other clients.

By applying the technical solutions of the present embodiments, the user may not only tune locally, but also interact with other users, that is, based on the community data shared by the cloud, each user may become a tuner, and all community parameters authenticated by the cloud may be downloaded freely, thereby enriching choices of the user, increasing interaction and playability and improving user experience.

Further, as a refinement and extension of the above embodiment, optionally, different from the left channel and the right channel, the different channels in step 401 can be channels corresponding to different areas inside the vehicle, and the tuning configuration information of the different channels can include mute configuration information, gain configuration information, delay configuration information, and the like of each of the different channels.

For example, the areas inside the vehicle in the present embodiment can be areas inside a cab of a vehicle, and the different channels can be respective channels corresponding to different areas in the cab, for example, a center channel, a left front door channel, a right front door channel, a left rear door channel, a right rear door channel, a left surround channel, a right surround channel, a left front 3D channel, a right front 3D channel, a left rear 3D channel, a right rear 3D channel, and the like.

More tuning interfaces can be opened for the user on an operation interface of a head unit system (that is, an in-vehicle infotainment system) in a client. For example, each channel can be muted or unmuted, which makes the degree of freedom of sound control higher. Gain can be set for each channel, that is, the gain can be adjusted arbitrarily in a range, and the setting can be reset to a default value, so that the user can finely define his/her favorite sound quality. Delay can be set for each channel, that is, the delay can be adjusted arbitrarily in a range, and the setting can be reset to a default value. In addition, it is also possible to control sound field and sound image of the whole vehicle, and adjust a width, a depth or a height of the sound field.

In practical applications, the users may configure mute information, gain information and/or delay information corresponding to different channels according to different areas (for example, a left front door area, a right front door area, a left rear door area, a right rear door area, and the like) inside the vehicle, thereby greatly improving the degree of freedom in tuning performed by the users. In addition, the users may also set the plurality of channels in different areas inside the vehicle, so as to customize the sound effect of the whole vehicle in combination with the music playing environment in the areas inside the vehicle, and obtain sound effect parameters more suitable for on-board music playing. Compared with the existing method that only the left channel and the right channel may be set through the equalizers, the present disclosure may have tuning interfaces of a plurality of channels in different areas inside the vehicle open to users, so that the users may set sound effect parameters of sound playing in different areas inside the vehicle. In the process of on-board music playing, the user may control any channel to mute and adjust the sound quality, the sound field and the sound image of the whole vehicle.

On this basis, the user can also upload the tuning parameters set in his/her own device to the cloud for sharing, so that other users (for example, users driving the same vehicle model) can download the tuning parameters shared by the user and directly apply the tuning parameters to local music playing, and thus the effect of music playing can be quickly experienced. Since these sound effect parameters will be more suitable for on-board music playing, thereby effectively improving the listening experience of the user.

Further, in order to meet sharing requirements of a designated user, optionally, step 402 can specifically include: receiving the tuning configuration information and one or more target account identifiers, and sending the tuning configuration information to one or more other clients corresponding to the one or more target account identifiers after determining that the tuning configuration information has passed the authentication. Through this optional method, the tuning parameters set by the user can be shared for the designated user, thereby meeting more interactive needs among users and improving user experience.

Further, in order to illustrate the implementation contents of the above embodiments, the following application scenarios are given in combination with the methods shown in FIG. 5 to FIG. 6, but are not limited to this.

As shown in FIG. 4, the user can adjust sound effects on a user interface (UI) for tuning in the head unit (HU) system, that is, mute configuration, gain configuration and/or delay configuration are performed on different channels inside the vehicle according to the areas inside the vehicle. The head unit system calls corresponding tuning interfaces to send the tuning configuration information to a digital signal processing (DSP) processor, and thus the sound effect parameters corresponding to the tuning configuration information in the sound effect algorithm library of the DSP processor may be controlled in real time by calling the interfaces, thereby realizing real-time tuning. At the same time, a media stream of sound (for example, audio broadcast sound, song sound, video sound, or the like) is accessed to the DSP processor through a media interface, sound effect parameters corresponding to current configuration information (at least one of mute configuration information, gain configuration information or delay configuration information of different channels) in the sound effect algorithm library of the DSP processor are obtained, and then tuning processing is performed on the accessed media stream using digital signal processing technologies based on the obtained sound effect parameters, thereby realizing the algorithm processing that the media stream may be tuned in real time. Finally, the tuned media stream passes through a power amplifier and sounds through a speaker to realize sound playing and be perceived by the user.

After setting the tuning parameters, the user can also share the tuning settings with other vehicle owners through the network. Correspondingly, the obtained tuning configuration information can also be uploaded and shared. On the head unit system side, a configuration sharing instruction is received, and tuning configuration information is uploaded to the cloud for storage and authentication, where the tuning configuration information that that has passed the authentication can be shared in the community, that is, the tuning configuration information is distributed. For example, the parameters adjusted by the user can be uploaded to the cloud for community sharing, and the tuning parameters authenticated by the server can be distributed and recommended to users, thereby forming an ecological closed loop of tuning application. The user can store the tuned parameters locally, or the user can select to upload the tuned parameters to the cloud for community sharing. As shown in FIG. 4, the user can upload the tuned parameters to the cloud through a 5G communication system, and the cloud can store and authenticate the tuned parameters. After passing the authentication, the tuned parameters can be distributed and pushed. All users can download and store the pushed contents locally, and apply the sound effects to their vehicles. Media playing can be processed by the downloaded sound effect parameters, thereby forming a tuning application ecosystem.

Compared with the traditional user-defined equalizer adjustment parameters, which can only be stored locally and cannot be uploaded to the cloud and shared with other vehicle owners, the solutions provided in the present embodiments can upload the tuning parameters configured by the user to the cloud for sharing, and after the authentication is conducted by the original equipment manufacturer, other users can download and apply the tuning parameters, thereby forming an ecological closed loop of tuning application. By applying the technical solutions of the present embodiments, the user may not only tune locally, but also interact with other users, that is, based on the data shared by the cloud, each user may become a tuner, and all parameters authenticated by the cloud may be downloaded freely, thereby enriching choices of the user, increasing interaction and playability and improving user experience. Further, as a specific implementation of the methods shown in FIG. 1 and FIG. 3, the present embodiment provides an apparatus for controlling sound playing. As shown in FIG. 7, the apparatus for controlling sound playing includes a receiving module 51 and a control module 52.

The receiving module 51 is configured to receive tuning configuration information performed by a user for different channels, where the different channels correspond to different areas inside a vehicle.

The control module 52 is configured to perform tuning processing on a media stream by using digital signal processing technologies based on sound effect parameters corresponding to the tuning configuration information in a sound effect algorithm library by calling a control interface, where a tuned media stream is used for sound playing.

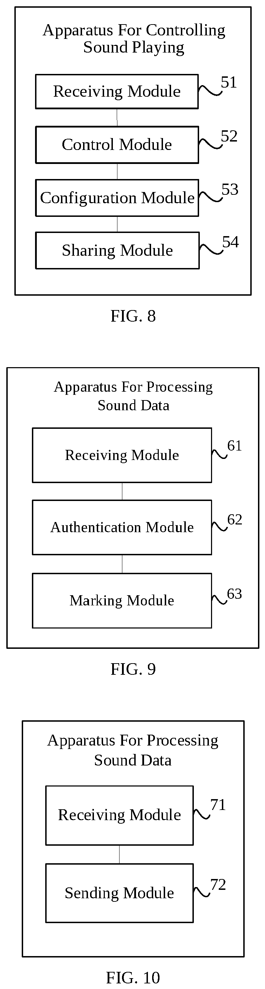

In a specific application scenario, as shown in FIG. 8, the apparatus for controlling sound playing further includes a configuration module 53.

The configuration module 53 is configured to before receiving the tuning configuration information performed by the user for different channels, receive a crossover channel configuration instruction, and configure one or more crossover points corresponding to each area inside the vehicle based on the crossover channel configuration instruction to obtain a plurality of channels determined based on the one or more crossover points, where the one or more crossover points include a crossover point between a bass and a midrange, and/or a crossover point between the midrange and a treble.

In a specific application scenario, the receiving module 51 is specifically configured to receive tuning configuration information obtained by merging a plurality of channels corresponding to a same area inside the vehicle, where the plurality of channels corresponding to the same area are capable of performing unified parameter adjustment.

In a specific application scenario, the receiving module 51 is specifically configured to receive tuning configuration information obtained by grouping a plurality of channels corresponding to left-right symmetrical areas inside the vehicle, where the plurality of channels corresponding to the left-right symmetrical areas are capable of performing unified parameter adjustment.

In a specific application scenario, as shown in FIG. 8, the apparatus for controlling sound playing further includes a sharing module 54.

The sharing module 54 is configured to receive a configuration sharing instruction, and uploading the tuning configuration information to a server for authentication based on the configuration sharing instruction, where tuning configuration information that has passed the authentication is capable of sharing in a community.

In a specific application scenario, the receiving module 51 is specifically configured to obtain current driving characteristics of the vehicle, where the current driving characteristics include at least one of time information, driving information, vehicle state information, vehicle location information or vehicle environment information; obtain historical configuration information for different channels selected by the user in a historical driving scenario similar to the current driving characteristics; recommend the historical configuration information to the user; and obtain tuning configuration information performed by the user for different channels based on the historical configuration information.

In a specific application scenario, the receiving module 51 is specifically configured to calculate a similarity between the current driving characteristics with sample driving characteristics when historically selecting a channel configuration by the user, where the sample driving characteristics include at least one of time information, driving information, vehicle state information, vehicle location information or vehicle environment information during historical driving processes; and obtain the historical configuration information for different channels corresponding to sample driving characteristics with similarity greater than a target threshold.

In a specific application scenario, the receiving module 51 is specifically configured to calculate similarities corresponding to the time information, the driving information, the vehicle state information, the vehicle location information and the vehicle environment information respectively to obtain a time information similarity, a driving information similarity, a vehicle state information similarity, a vehicle location information similarity and a vehicle environment information similarity, and multiply one or more of the time information similarity, the driving information similarity, the vehicle state information similarity, the vehicle location information similarity and the vehicle environment information similarity by corresponding weight values and sum them to obtain the similarity between the current driving characteristics with the sample driving characteristics.

It should be noted that other corresponding descriptions of various functional units involved in the apparatus for controlling sound playing provided by the present embodiment can refer to the corresponding descriptions in FIG. 1 and FIG. 3, and will not be repeated here.

Further, as a specific implementation of the method shown in FIG. 5, the present embodiment provides an apparatus for processing sound data, which can be applied to a server. As shown in FIG. 9, the apparatus for processing sound data includes a receiving module 61, an authentication module 62 and a marking module 63.

The receiving module 61 is configured to receive tuning configuration information for different channels sent by a client.

The authentication module 62 is configured to perform authentication on the tuning configuration information.

The marking module 63 is configured to mark the tuning configuration information as authentication success in response to the tuning configuration information having passed the authentication, where the tuning configuration information with a mark of authentication success is configured to be shared with one or more other clients.

In a specific application scenario, the authentication module 62 is specifically configured to score the tuning configuration information based on a set evaluation dimension to obtain scoring information, where the set evaluation dimension includes at least one of sound quality dimension, sound field dimension, sound image dimension, overall listening dimension, ambisonic dimension or vibration dimension; and determine whether the tuning configuration information has passed the authentication based on the scoring information.

In a specific application scenario, the authentication module 62 is specifically configured to play a test song based on the tuning configuration information; and determine a scoring score of the tuning configuration information based on a playing effect of the test song.

The authentication module 62 is specifically configured to perform weighted summation on scoring scores to obtain an evaluation total score; and determine that the tuning configuration information has passed the authentication in response to the evaluation total score being greater than or equal to a target score threshold.

In a specific application scenario, the receiving module 61 is specifically configured to receive the tuning configuration information and a target song corresponding to the tuning configuration information; and
the authentication module 62 is specifically configured to play the target song based on the tuning configuration information; and determine the scoring score of the tuning configuration information based on the playing effect of the target song.

In a specific application scenario, the marking module 63 is further configured to in response to the tuning configuration information having passed the authentication, generate binding recommendation information based on the tuning configuration information and the target song.

In a specific application scenario, the authentication module 62 is further configured to perform frequency response test and phase test on the tuning configuration information; and in response to frequency response information and phase information corresponding to the tuning configuration information conforming to a target change rule, determine that the tuning configuration information has passed the authentication.

In a specific application scenario, the marking module 63 is further configured to generate recommendation information based on the tuning configuration information with a mark of authentication success and send the recommendation information to the client.

It should be noted that other corresponding descriptions of functional units involved in the apparatus for processing sound data provided by the present embodiment can refer to the corresponding descriptions in FIG. 5, and will not be repeated here.

Further, as a specific implementation of the method shown in FIG. 6, the present embodiment provides another apparatus for processing sound data, which can be applied to a client. As shown in FIG. 10, the apparatus for processing sound data includes a receiving module 71 and a sending module 72.

The receiving module 71 is configured to receive tuning configuration information performed by a user for different channels.

The sending module 72 is configured to send the tuning configuration information to the server.

In a specific application scenario, optionally, the different channels correspond to different areas inside a vehicle.

In a specific application scenario, the sending module 72 is specifically configured to send the tuning configuration information and one or more target account identifiers to the server, so as to enable the server to send the tuning configuration information to one or more other clients corresponding to the one or more target account identifiers after determining that the tuning configuration information has passed the authentication.

It should be noted that other corresponding descriptions of functional units involved in the apparatus for processing sound data provided by the present embodiment can refer to the corresponding descriptions in FIG. 6, and will not be repeated here.

Based on the above methods as shown in FIG. 1, FIG. 3 and FIG. 6, correspondingly, the present embodiment also provides a computer readable storage medium storing a computer program. When the computer program is executed by a processor, the methods shown in FIG. 1, FIG. 3 and FIG. 6 are implemented. Based on the method shown in FIG. 5, correspondingly, the present embodiment also provides another computer readable storage medium storing a computer program. When the computer program is executed by a processor, the method shown in FIG. 5 is implemented.

Based on this understanding, the technical solution of the present disclosure can be embodied in the form of a software product, which can be stored in a non-volatile storage medium (which can be a CD-ROM, a USB flash drive, a mobile hard disk, and the like) and includes several instructions to cause a computer device (which can be a personal computer, a server, or a network device, and the like) to execute the methods of various implementation scenarios of the present disclosure.

Based on the above methods as shown in FIG. 1, FIG. 3 and FIG. 6, and the virtual apparatus embodiments as shown in FIG. 7, FIG. 8 and FIG. 10, in order to achieve the above objectives, an embodiment of the present disclosure also provides an electronic device, which can be configured at a vehicle (for example, a new energy vehicle or a traditional vehicle) end, and includes a storage medium and a processor. The storage medium is configured to store a computer program. The processor is configured to execute the computer program to implement the above methods as shown in FIG. 1, FIG. 3 and FIG. 6.

Optionally, the above entity device may also include a user interface, a network interface, a camera, a radio frequency (RF) circuit, a sensor, an audio circuit, a WI-FI module, and the like. The user interface may include a display, an input unit such as a keyboard, and the like. Optionally, the user interface may also include a USB interface, a card reader interface, and the like. The network interface can optionally include a standard wired interface, a wireless interface (for example, a WI-FI interface), and the like.

It can be understood by a person skilled in the art that the above entity device structure provided by the present embodiment does not constitute a limitation on the entity device, and may include more or less components, or combine some components, or have different component arrangements.

The storage medium may also include an operating system and a network communication module. The operating system is a program that manages hardware and software resources of the above entity device, and supports the operation of information processing programs and other software and/or programs. The network communication module is configured to realize the communication between components in the storage medium and the communication with other hardware and software in the information processing entity device.

Based on the above, the present embodiment further provides a system for processing sound data, including a head unit device and a server device.

The server device can be configured to perform the method shown in FIG. 5, and the head unit device can be configured to perform the method shown in FIG. 6.

The head unit device can be configured to receive tuning configuration information performed by a user for different channels; and send the tuning configuration information to the server device.

The server device can be configured to receive the tuning configuration information performed by the user for different channels sent by the head unit device; perform authentication on the tuning configuration information; mark the tuning configuration information as authentication success in response to the tuning configuration information having passed the authentication, where the tuning configuration information with a mark of authentication success is configured to be shared with one or more other head unit devices.

Based on the above electronic device, an embodiment of the present disclosure also provides a vehicle, which can specifically include the apparatus as shown in FIG. 7 and FIG. 8, the apparatus as shown in FIG. 10, or the above electronic device. The vehicle can be a new energy vehicle or a traditional vehicle.

Through the description of the above implementation manners, a person skilled in the art may clearly understand that the present disclosure may be implemented through software and necessary general hardware platforms, or through hardware implementation. By applying the solutions of the present embodiments, the tuning interfaces of the plurality of channels in different areas inside the vehicle may be opened to the user, so that the users may set sound effect parameters of sound playing in different areas inside the vehicle. In the process of playing on-board music, the user may control any channel to mute and adjust the sound quality, the sound field and the sound image of the whole vehicle, which not only may the degree of freedom in tuning performed by the user be greatly improved, but also the plurality of channels in different areas inside the vehicle may be set respectively, so that the sound effect of the whole vehicle may be customized in combination with the music playing environment in the areas inside the vehicle, and sound effect parameters more suitable for music playing may be obtained, thereby effectively improving the feeling of the user when listening to music inside the vehicle and further improving user experience. In addition, the user may not only tune locally, but also interact with other users, that is, each user may become a tuner based on the data shared by the cloud, and all parameters authenticated by the cloud may be downloaded freely, thereby enriching choices of the user, increasing interaction and playability and improving user experience. By applying the technical solutions of the present embodiments, the user may not only tune locally, but also interact with other users, that is, based on the data shared by the cloud, each user may become a tuner, and all parameters authenticated by the cloud may be downloaded freely, thereby enriching choices of the user, increasing interaction and playability and improving user experience.

It should be noted that in the present disclosure, relational terms such as "first" and "second" are only used to distinguish one entity or operation from another entity or operation, and do not necessarily require or imply any such actual relationship or order between these entities or operations. Moreover, the terms "including" or any other variations are intended to encompass a non-exclusive inclusion, so that processes, methods, articles or devices that include a plurality of elements include not only those elements but also other elements that are not explicitly listed, or elements inherent to such processes, methods, articles or devices. Without further limitation, an element defined by the phrase "including a ..." does not exclude the presence of additional identical elements in the processes, methods, articles or devices that include the element.

The above is only the specific implementation manners of the present disclosure, which enables a person skilled in the art to understand or implement the present disclosure. Various modifications to these embodiments will be obvious to a person skilled in the art, and the general principles defined herein can be implemented in other embodiments without departing from the spirit or scope of the present disclosure. Therefore, the present disclosure will not be limited to the embodiments described herein, but will conform to the widest scope consistent with the principles and novel features applied herein.

## Claims

1. A method for controlling sound playing, comprising:
receiving tuning configuration information performed by a user for different channels, wherein the different channels correspond to different areas inside a vehicle; and
performing tuning processing on a media stream by using digital signal processing technologies based on sound effect parameters corresponding to the tuning configuration information in a sound effect algorithm library by calling a control interface, wherein a tuned media stream is used for sound playing.

2. The method according to claim 1, before receiving the tuning configuration information performed by the user for different channels, the method further comprises:
receiving a crossover channel configuration instruction, and configuring one or more crossover points corresponding to each area inside the vehicle based on the crossover channel configuration instruction to obtain a plurality of channels determined based on the one or more crossover points, wherein the one or more crossover points comprise a crossover point between a bass and a midrange, and/or a crossover point between the midrange and a treble.

3. The method according to claim 1, wherein receiving the tuning configuration information performed by the user for different channels comprises:
receiving tuning configuration information obtained by merging a plurality of channels corresponding to a same area inside the vehicle, wherein the plurality of channels corresponding to the same area are capable of performing unified parameter adjustment.

4. The method according to claim 1, wherein receiving the tuning configuration information performed by the user for different channels comprises:
receiving tuning configuration information obtained by grouping a plurality of channels corresponding to left-right symmetrical areas inside the vehicle, wherein the plurality of channels corresponding to the left-right symmetrical areas are capable of performing unified parameter adjustment.

5. The method according to any one of claims 1 to 4, further comprising:
receiving a configuration sharing instruction, and uploading the tuning configuration information to a server for authentication based on the configuration sharing instruction, wherein tuning configuration information that has passed the authentication is capable of sharing in a community.

6. The method according to claim 5, wherein uploading the tuning configuration information to the server for authentication comprises:
receiving the tuning configuration information performed by the user for different channels; and
sending the tuning configuration information to the server, so as to enable the server to perform authentication on the tuning configuration information, wherein tuning configuration information with a mark of authentication success is configured to be shared with one or more other clients.

7. The method according to claim 6, wherein sending the tuning configuration information to the server, so as to enable the server to perform authentication on the tuning configuration information comprises:
sending the tuning configuration information and one or more target account identifiers to the server, so as to enable the server to send the tuning configuration information to one or more other client corresponding to the one or more target account identifiers after determining that the tuning configuration information has passed the authentication.

8. The method according to claim 1, wherein receiving the tuning configuration information performed by the user for different channels comprises:
obtaining current driving characteristics of the vehicle, wherein the current driving characteristics comprise at least one of time information, driving information, vehicle state information, vehicle location information or vehicle environment information;
obtaining historical configuration information for different channels selected by the user in a historical driving scenario similar to the current driving characteristics;
recommending the historical configuration information to the user; and
obtaining tuning configuration information performed by the user for different channels based on the historical configuration information.

9. The method according to claim 8, wherein obtaining the historical configuration information for different channels selected by the user in the historical driving scenario similar to the current driving characteristics comprises:
calculating a similarity between the current driving characteristics with sample driving characteristics when historically selecting a channel configuration by the user, wherein the sample driving characteristics comprise at least one of time information, driving information, vehicle state information, vehicle location information or vehicle environment information during historical driving processes; and
obtaining the historical configuration information for different channels corresponding to sample driving characteristics with similarity greater than a target threshold.

10. The method according to claim 9, wherein calculating the similarity between the current driving characteristics with the sample driving characteristics when historically selecting the channel configuration by the user comprises:
calculating similarities corresponding to the time information, the driving information, the vehicle state information, the vehicle location information and the vehicle environment information respectively to obtain a time information similarity, a driving information similarity, a vehicle state information similarity, a vehicle location information similarity and a vehicle environment information similarity, and multiplying one or more of the time information similarity, the driving information similarity, the vehicle state information similarity, the vehicle location information similarity and the vehicle environment information similarity by corresponding weight values and summing them to obtain the similarity between the current driving characteristics with the sample driving characteristics.

11. A method for processing sound data, comprising:
receiving tuning configuration information for different channels sent by a client;
performing authentication on the tuning configuration information; and
marking the tuning configuration information as authentication success in response to the tuning configuration information having passed the authentication, wherein the tuning configuration information with a mark of authentication success is configured to be shared with one or more other clients.

12. The method according to claim 11, wherein performing authentication on the tuning configuration information comprises:
scoring the tuning configuration information based on a set evaluation dimension to obtain scoring information, wherein the set evaluation dimension comprises at least one of sound quality dimension, sound field dimension, sound image dimension, overall listening dimension, ambisonic dimension or vibration dimension; and
determining whether the tuning configuration information has passed the authentication based on the scoring information.

13. The method according to claim 12, wherein scoring the tuning configuration information based on the set evaluation dimension to obtain the scoring information comprises:
playing a test song based on the tuning configuration information; and
determining a scoring score of the tuning configuration information based on a playing effect of the test song;
determining whether the tuning configuration information has passed the authentication based on the scoring information comprises:
performing weighted summation on scoring scores to obtain an evaluation total score; and
determining that the tuning configuration information has passed the authentication in response to the evaluation total score being greater than or equal to a target score threshold.

14. The method according to claim 13, further comprising:
receiving a target song corresponding to the tuning configuration information;
playing the test song based on the tuning configuration information comprises:
playing the target song based on the tuning configuration information;
determining the scoring score of the tuning configuration information based on the playing effect of the test song comprises:
determining the scoring score of the tuning configuration information based on the playing effect of the target song.

15. The method according to claim 14, further comprising:
in response to the tuning configuration information having passed the authentication, generating binding recommendation information based on the tuning configuration information and the target song.

16. The method according to claim 11, wherein performing authentication on the tuning configuration information comprises:
performing frequency response test and phase test on the tuning configuration information; and
in response to frequency response information and phase information corresponding to the tuning configuration information conforming to a target change rule, determining that the tuning configuration information has passed the authentication.

17. The method according to claim 11, wherein performing authentication on the tuning configuration information comprises:
receiving the tuning configuration information and one or more target account identifiers, and sending the tuning configuration information to one or more other clients corresponding to the one or more target account identifiers after determining that the tuning configuration information has passed the authentication.

18. The method according to claim 11, wherein the different channels correspond to different areas inside a vehicle.

19. An apparatus for controlling sound playing, comprising:
a receiving module configured to receive tuning configuration information performed by a user for different channels, wherein the different channels correspond to different areas inside a vehicle; and
a control module configured to perform tuning processing on a media stream by using digital signal processing technologies based on sound effect parameters corresponding to the tuning configuration information in a sound effect algorithm library by calling a control interface, wherein a tuned media stream is used for sound playing.

20. An apparatus for processing sound data, comprising:
a receiving module configured to receive tuning configuration information for different channels sent by a client;
an authentication module configured to perform authentication on the tuning configuration information; and
a marking module configured to mark the tuning configuration information as authentication success in response to the tuning configuration information having passed the authentication, wherein the tuning configuration information with a mark of authentication success is configured to be shared with one or more other clients.

21. A computer readable storage medium on which a computer program is stored, wherein the computer program, when executed by a processor, causes the processor to implement the method according to any one of claims 1 to 18.

22. An electronic device, comprising a storage medium, a processor and a computer program stored on the storage medium and executable on the processor, wherein the processor, when executing the computer program, implements the method according to any one of claims 1 to 18.

23. A vehicle, comprising: the apparatus according to any one of claims 19 to 20 or the electronic device according to claim 22.
